# EUROPÄISCHE PATENTSCHRIFT

(11) **EP 2 052 283 B1**
(45) Veröffentlichungstag und Bekanntmachung des Hinweises auf die Patenterteilung: **20.08.2014**
(21) Anmeldenummer: 07818719.2
(22) Anmeldetag: 05.10.2007
(51) Int. Cl.: G02B 6/00, F21V 8/00, B60Q 1/00, F21S 8/10

(54) **FAHRZEUGSCHEINWERFER**
VEHICLE HEADLIGHT
PHARE DE VÉHICULE

(30) Priorität: 30.10.2006 DE 102006051060
(43) Veröffentlichungstag der Anmeldung: 29.04.2009
(73) Patentinhaber: Bayerische Motoren Werke Aktiengesellschaft, 80809 München (DE)
(72) Erfinder: ERDL, Helmut, 83569 Vogtareuth (DE)
(74) Vertreter: Mayer-Martin, Christian
(86) Internationale Anmeldenummer: PCT/EP2007/008642
(87) Internationale Veröffentlichungsnummer: WO 2008/052634

(56) Entgegenhaltungen:
- DE-A1- 10 344 130
- FR-A- 2 858 278
- GB-A- 2 222 241
- US-A1- 2003 112 638
- US-A1- 2003 174 509
- US-A1- 2004 184 286

## Beschreibung

Die Erfindung betrifft einen Fahrzeugscheinwerfer mit einem Lichtleiterring.

Auch aufgrund designerischer Vorgaben wird insbesondere im Fahrzeugscheinwerferbereich häufig angestrebt, ringförmige bzw. ringähnliche Strukturen als Beleuchtungsmittel einzusetzen.

Aus der DE102004003402 A1 ist bereits ein Fahrzeugscheinwerfer mit einem Lichtleitelement bekannt. Dabei wird Licht einer Lichtquelle am Brennpunkt eines Reflektors in den Querschnitt eines Lichtleiters eingekoppelt (Anspruch 1) und/oder an einer Brennlinie eines Reflektors in eine Lichteintrittsfläche eines Lichtleiterringes, der in diesem Dokument als Lichtleiter ausgeführt ist, eingekoppelt (Ansprüche 8 und 9).

Dieser zuletzt genannte Lichtleiterring wirkt in diesem Stand der Technik als undefinierte Streuoptik, welche die Rohlichtverteilung des Reflektors ebenso Undefiniert aufweitet. Die Erfüllung jüngerer gesetzlicher Vorgaben, insbesondere hinsichtlich eines Tagfahrlichtes, ist mit einer solchen undefinierten Streuoptik nicht oder nur auf äußerst ineffiziente und unwirtschaftliche Weise möglich.

Aus der DE19833299 C1 ist eine Beleuchtungseinrichtung bekannt mit einem Leuchtmittel, dessen Lichtstrahlen an einem im Strahlengang angeordneten transparenten Lichtbrechungselement abgelenkt werden. Das plattenartige Lichtbrechungselement ist in der Art eines Fresnelprismas ausgebildet, bei dem verschiedene Lichtbrechungszonen stufenförmig zusammen geschobenen Prismenzonen eines Prismenkörpers entsprechen.

Aus der DE 10 2004 046 386 A1 ist ein Lichtleiter bekannt, aus dem Licht durch eine Reflexionsstruktur an einer Lichtaustrittsseite aus dem Lichtleiter herausgelenkt wird. Die Reflexionsstruktur ist dabei durch Prismen gebildet, die unterschiedliche Querschnittsform haben.

Aus der US2004/0184286 ist ein Fahrzeugscheinwerfer bekannt, welcher einen im wesentlichen torusförmigen Lichtleiter aufweist, dessen Vorderseite asphärisch geformt ist und der durch eine diffusive Rückseite und einen Reflektor Licht in Richtung einer Hauptabstrahlrichtung emittiert.

Der Erfindung liegt nun die Aufgabe zu Grunde, einen Lichtleiterring in einem Fahrzeugscheinwerfer effizient zu betreiben.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert demnach auf dem Gedanken, die Vorderseite eines Lichtleiterringes asphärisch auszuführen, um die sphärische Abberation des Lichtleiterringes zu korrigieren. Dadurch kann zumindest ein Großteil (je nach Ausführungsvariante mindestens 30%, 50 %, 70 % oder 90 % der aus dem Lichtleiterring stammenden Lichtstärke) des durch den Lichtleiterring abgestrahlten Lichtes in Hauptabstrahlrichtung abgestrahlt werden, und dadurch ein Fahrzeugscheinwerfer mit einem Lichtleiterring effizient betrieben werden. Insbesondere können dadurch gesetzliche Vorgaben auf wirtschaftliche und effiziente Weise auch mittels eines Lichtleiterringes erfüllt werden, und dem Ring ein sehr helles Aussehen in eine bestimmte Richtung verliehen werden.

Vorzugsweise weist ein Fahrzeugscheinwerfer eine Lichtquelle und einen Lichtleiterring auf, in den Licht der Lichtquelle eintritt. Eine Vielzahl von Prismen, die auf der Rückseite des Lichtleiterringes insbesondere umlaufend angeordnet sind, bewirkt ein Austreten des Lichts aus dem Lichtleiterring. Die Vorderseite, insbesondere die optische Vorderfläche, des Lichtleiterringes ist dabei vorzugsweise derart asphärisch ausgeführt, dass die sphärische Abberation des durch die Prismen abgelenkten und aus dem Lichtleiterring ausgekoppelten Lichtes korrigiert wird. Besonders bevorzugt ist die Vorderseite, insbesondere die optische Vorderfläche, des Lichtleiterringes dabei derart asphärisch ausgeführt, dass sie die Abbildungsfehler in der Nähe der optischen Achse minimiert und damit möglichst alle Bündelstrahlen auf der optischen Achse des Lichtleitringes in Hauptabstrahlrichtung kollimiert.

Durch die Verwendung der Prismenoptik wird eine definierte und gerichtete Auskopplung des Lichtes erreicht, wodurch es möglich ist, gesetzliche Vorgaben unter Berücksichtigung der Scheinwerferausführung oder der Fahrzeugausführung auf effiziente Weise einzuhalten. Die Prismen sind vorzugsweise durch entsprechende Ausnehmungen oder entsprechende auskragende Strukturen umlaufend auf der Rückseite des Lichtleiterringes gebildet und ragen radial in Richtung Mittelpunkt des Querschnittkreises oder vom Mittelpunkt des Querschnittkreises weg.

Der vorzugsweise im Wesentlichen für Licht transparente, aus Kunststoff oder Glas bestehende, Lichtleiterring kann im Wesentlichen die Gestalt eines Torus aufweisen. Im Rahmen der Erfindung liegen dabei aber auch Lichtleiterringe, deren Form nicht nur an der Lichtleiterringvorderseite (asphärisch) und an der Lichtleiterringrückseite (Prismenstruktur) von einem idealen Torus abweicht. So muss der Torus beispielsweise nicht geschlossen oder exakt kreisförmig sein. Auch kann der Torus gerade Lichtleiterstücke umfassen, die insbesondere der Lichtzuführung dienen können.

Mit fortschreitendem Lichtweg in einem herkömmlichen Lichtleiterring findet eine Aperturvergrößerung des in den Lichtleiterring eingetretenen Lichtbündels statt, was eine breite Abstrahlcharakteristik des Lichtleiterringes zur Folge hat. Aufgrund der breit gestreuten Lichtverteilung ist aber auch nur eine geringe Lichtintensität in Hauptabstrahlungsrichtung möglich.

Besonders bevorzugt ist daher vorgesehen, dass die Auskoppelelemente, insbesondere die Prismen, im Wesentlichen in der Brennebene, insbesondere der Brennlinie, der asphärischen Vorderseite des Lichtleiterringes angeordnet sind. Dadurch wird das ausgekoppelte Licht entsprechend kollimiert. Das Licht wird besonders effizient in Richtung der Hauptabstrahlrichtung abgestrahlt. Insbesondere sind die Prismen derart ausgeführt, und die Vorderseite, insbesondere die optische Vorderfläche, des Lichtleiterringes derart asphärisch ausgeführt, dass von dem Lichtleiterring Licht im Wesentlichen (je nach Ausführungsvariante mindestens 30%, 50 %, 70 % oder 90 % der aus dem Lichtleiterring stammenden Lichtstärke) entlang einer Hauptabstrahlrichtung, die parallel zur Fahrzeuglängsachse liegt, austritt.

Gemäß einer bevorzugten Weiterbildung bilden die Prismen einen Ausschnitt eines Fresnelprismas. Dadurch werden die Herstellung eines zuverlässigen und effizienten erfindungsgemäßen Fahrzeugscheinwerfers und dessen bauraurnsparende Integration in ein Fahrzeug vereinfacht.

Vorteilhafterweise ist vorgesehen, dass das Licht aus der Lichtquelle indirekt über einen Reflektor oder direkt in den Lichtleiterring eingekoppelt wird.

Gemäß einer vorteilhaften Ausführung ist ein Reflektor des Fahrzeugscheinwerfers derart ausgeführt ist, dass von der Lichtquelle abgestrahltes Licht in einem Brennpunkt fokussiert wird, welcher in einem Einkoppelbereich des Lichtleiterringes liegt. Dadurch wird Licht in den Lichtleiterring eingekoppelt. Der Lichtleiterring kann dabei einen von der Einkoppelstelle zum eigentlichen ringförmigen Teil des Lichtleiterringes lichtführenden, beispielsweise geraden, Lichtleiter umfassen. Anstelle der Lichteinspeisung über Lichtquelle und Reflektor ist vorzugsweise alternativ vorgesehen, dass das Licht einer Leuchtdiode, insbesondere direkt oder über eine Sammeloptik, in den Lichtleiter eingespeist wird.

Vorzugsweise ist der Abstand zwischen dem Brennpunkt und der Vorderseite des Lichtleiterringes nicht wesentlich größer als die halbe Breite des Lichtleiterringes, und/oder ist die halbe Prismenbreite kleiner als die halbe Breite des Lichtleiterringes, insbesondere ist der Quotient aus halber Prismenbreite und halber Breite des Lichtleiterringes kleiner als 1,6. Denn dann kann Licht besonders effizient abgestrahlt werden, wie aufwändige Untersuchungen zeigten.

Im Folgenden wird die Erfindung anhand von Beispielen unter Bezugnahme auf die folgenden Figuren näher erläutert:
- Figur 1: zeigt eine schematische Schnittdarstellung eines Kraftfahrzeugscheinwerfers;
- Figur 2: zeigt eine schematische Darstellung eines Lichtleiterringes in Draufsicht;
- Figur 3: zeigt perspektivisch einen Ausschnitt eines Lichtleiterringes;
- Figur 4: zeigt schematisch Strahlengänge eines Teils eines Lichtleiterringes;
- Figur 5: veranschaulicht den Zusammenhang zwischen Objekthöhe und Feldwinkel;
- Figur 6: zeigt eine schematische Teil-Schnittdarstellung eines Lichtleiterringes von vorne;
- Figur 7: zeigt eine schematische Teil-Schnittdarstellung eines Lichtleiterringes von der Seite.

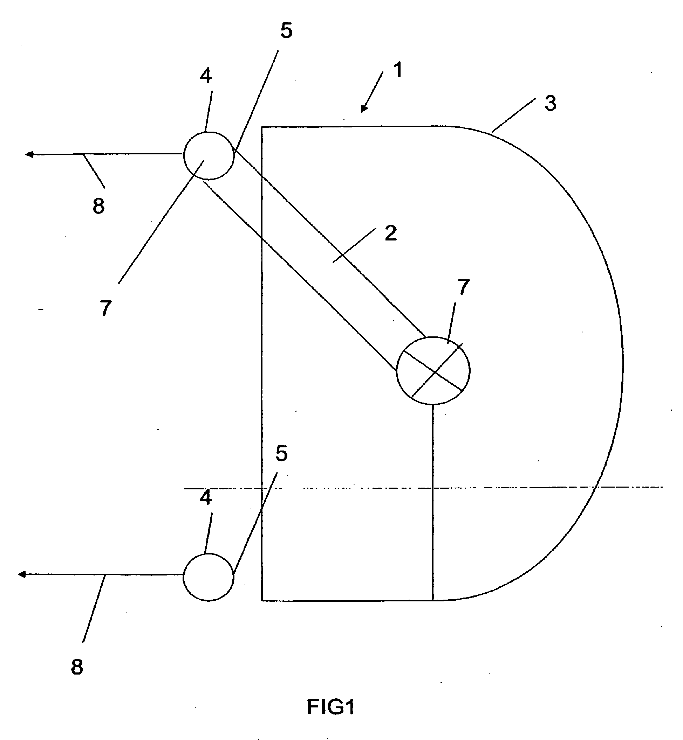

In Figur 1 ist ein Fahrzeugscheinwerfer 1 mit einem Gehäuse 3 schematisch dargestellt. Das von einer Lichtquelle 7 und gegebenenfalls über eine Sammeloptik erzeugte Licht wird über einen geraden Lichtleiter 2 zu dem eigentlichen Lichtleiterring 4 geführt und in diesen eingekoppelt. Der Lichtleiterring ist hier im Querschnitt dargestellt. Die Lichtleiterring- oder Torusquerschnittfläche 7 ist in dieser Figur der Einfachheit halber kreisförmig (Querschnittskreis) dargestellt.

Durch nicht dargestellte Prismen auf der Rückseite 5 des Lichtleiterringes 4 wird das eintretende Licht gestreut und definiert abgelenkt, so dass das Licht an der Vorderseite des Lichtleiterringes mit definierter Aufweitung im Wesentlichen in definierter Hauptabstrahlrichtung 8 wieder abgestrahlt wird bzw. wieder aus dem Lichtleiterring 4 austritt.

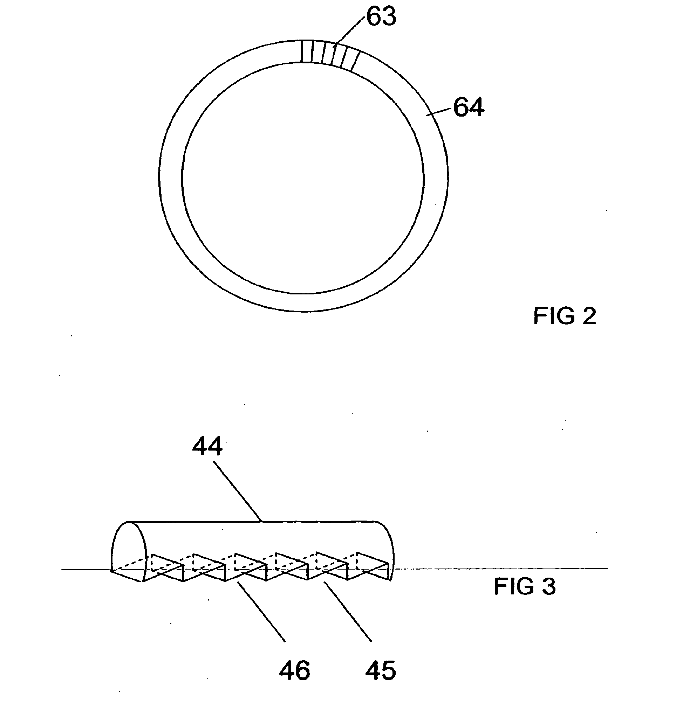

Figur 2 zeigt die Begrenzungslinien zwischen jeweils zwei Prismen der Prismenstruktur 63 auf dem Lichtleiterring 64 in Draufsicht.

Figur 3 zeigt zur Veranschaulichung eine perspektivische Darstellung eines Lichtleiterringsektors 44 mit einer auf der Rückseite 45 des Lichtleiterringsektors 44 angeordneten vereinfachten Prismenstruktur 46 im Sinne eines Fresnelprismas. Bei der dargestellten beispielhaften Ausführung ist der Lichtleiterringquerschnittskreis auf der Rückseite des Lichtleiterringes abgeplattet.

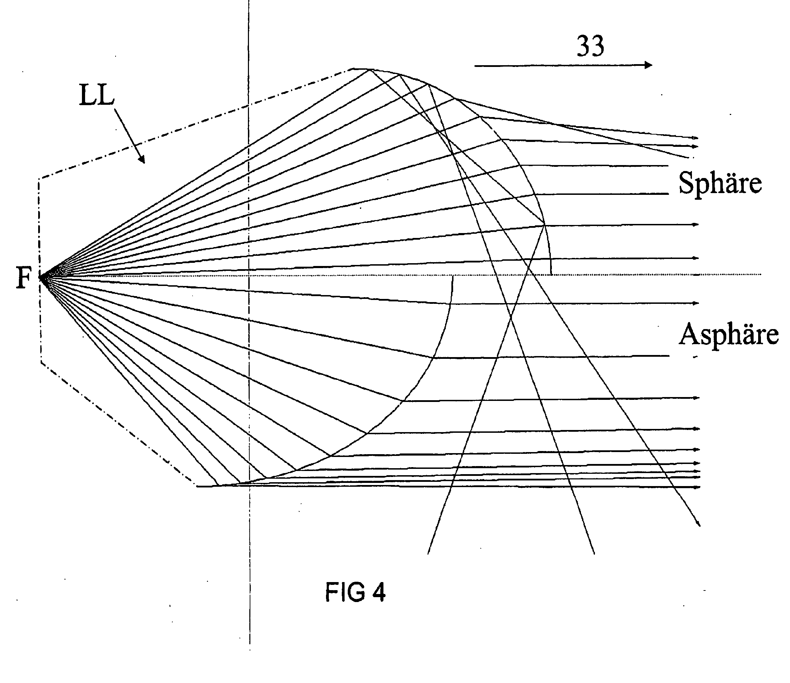

Figur 4 zeigt den Strahlengang eines punktförmigen Objektes F im Brennpunkt eines Lichtleiterringes LL, von dem ein Teil im Schnitt dargestellt ist. Die Vorderseite des Lichtleiterringes LL ist zu Erläuterungszwecken in der oberen Hälfte der Darstellung sphärisch ausgeführt und in der unteren Hälfte der Darstellung asphärisch ausgeführt. Bei der sphärischen Ausführung der Vorderseite wird Licht insbesondere außen oder im Randbereich des Lichtleiterringes LL aufgrund der sphärischen Abberation nicht entlang der Hauptabstrahlrichtung 33 abgestrahlt. Die asphärische Ausführung der Vorderseite bewirkt dagegen eine Korrektur dieser sphärischen Abberartion, so dass Licht auch außen oder im Randbereich des Lichtleiterringes LL im Wesentlichen oder annähernd entlang der Hauptabstrahlrichtung 33 von dem Lichtleiterring LL abgestrahlt wird.

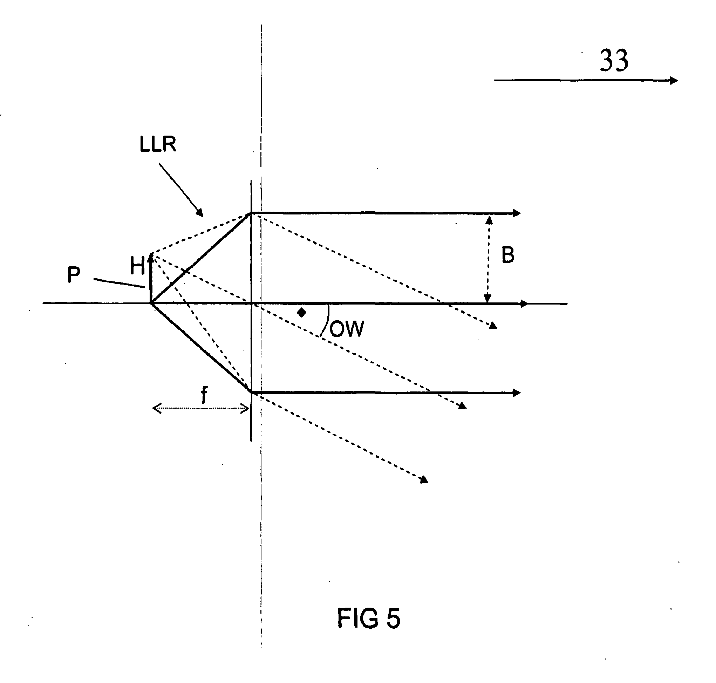

Figur 5 zeigt ein Objekt, hier ein Prisma P, mit der halben Breite H in der Brennebene eines Lichtleiterringes. Licht aus dem Brennpunkt (Fußpunkt des Pfeiles) des Lichtleiterringes wird entlang der Hauptabstrahlrichtung 33 vom Lichtleiterring LLR abgestrahlt. Licht, das vom Randbereich (Pfeilspitze) des Prismas P stammt, wird nicht entlang der Hauptabstrahlrichtung 33 vom Lichtleiterring LLR abgestrahlt, sondern entlang einer Richtung, die mit der Hauptabstrahlrichtung 33 einen Feldwinkel OW einschließt. f bezeichnet den Abstand zwischen Vorderseite des Lichtleiterringes und dem Prisma P, der hier der Brennweite entspricht. B bezeichnet dabei die halbe Breite des Lichtleiterringes.

Der Feldwinkel OW steigt mit der halben Breite H des Prismas an. Auch mit kleiner werdender Brennweite steigt der Feldwinkel OW an. Die oben erläuterte Korrektur der sphärischen Abberartion durch eine asphärische Vorderseite des Lichtleiterringes ist dann besonders wirksam möglich, wenn der Feldwinkel OW möglichst klein ist.

Aus diesem Grund soll die halbe Breite H des Prismas möglichst klein sein. Allerdings kann die Prismenbreite nicht beliebig reduziert werden, da ansonsten nicht mehr genügend Licht ausgekoppelt werden kann. Auch kann die Brennweite nicht beliebig erhöht werden, da ansonsten der Lichtleiterring zu viel Bauraum erfordert.

Daher ist es zudem ein Ziel, die Prismenbreite und die Brennweite so weit zu reduzieren, dass möglichst hohe Lichtintensitäten in eine bestimmte Abstrahlrichtung erzeugt werden können, und der Ring aus dieser Richtung betrachtet möglichst hohe Leuchtdichten aufweist.

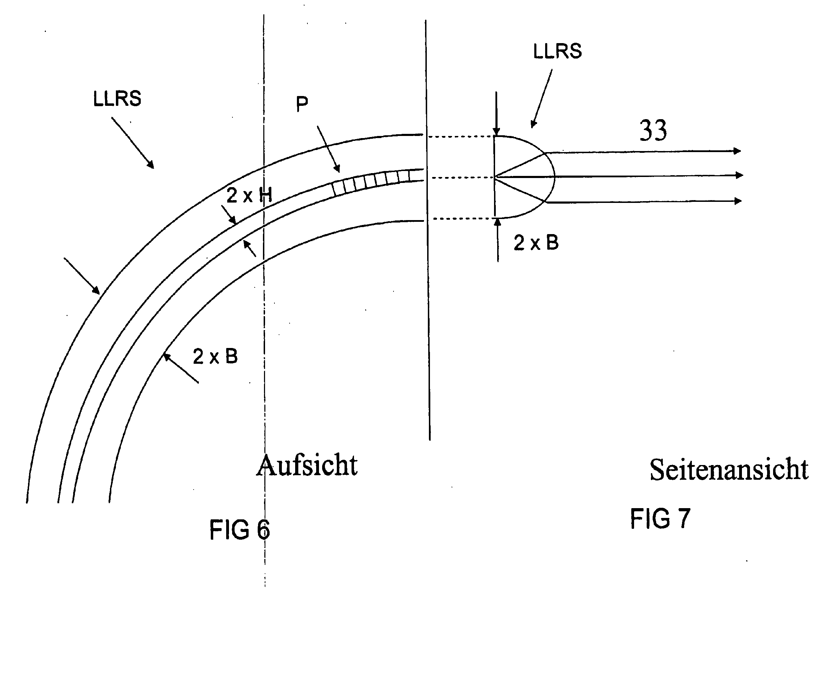

Figur 6 zeigt eine Schnittdarstellung eines Lichtleitringsektors LLRS in Aufsicht. Es ist ein Ausschnitt der umlaufenden auf dem Lichtleiterring angeordneten Prismen P mit einer Breite von 2xH dargestellt. B bezeichnet dabei die halbe Breite des Lichtleiterringes.

Figur 7 zeigt eine Schnittdarstellung eines Lichtleiterringsektors LLRS in Seitenansicht. Es ist die asphärische Vorderseite des Lichtleiterringsektors LLRS dargestellt, die eine Abstrahlung des von den Prismen abgelenkten Lichtes im Wesentlichen in Richtung der Hauptabstrahlrichtung 33 bewirkt.

Die vorstehenden Erläuterungen dienen dem Verständnis der Erfindung. Die tatsächliche Herstellung eines erfindungsgemäßen Lichtleiterringes kann zwar auf diesen Überlegungen basieren, erfolgt aber beispielsweise basierend auf einem Spritzgussverfahren, dessen Ergebnis ein einstückiger Lichtleiterring samt vorgegebener Prismenstrukturen ist. Die Erstellung der entsprechenden Spritzgussformen basiert aber wieder auf oben genannten Überlegungen und entsprechenden Berechnungen.

## Patentansprüche

1. Fahrzeugscheinwerfer (1)
mit einer Lichtquelle (7),
mit einem Lichtleiterring (4), in den Licht der Lichtquelle (7) eintritt, wobei der Lichtleiter im Wesentlichen die Gestalt eines Torus aufweist,
bei dem die Gestalt des Lichtleiterringes dadurch von einem idealen Torus abweicht, dass die Lichtleitervorderseite asphärisch ausgeführt ist und die Rückseite des Lichtleiterringes eine Vielzahl von Prismen (46) aufweist, um ein Austreten des Lichts aus dem Lichtleiterring (4) zu bewirken,
bei dem die Gestalt des Lichtleiterringes dadurch von einem idealen Torus abweicht, dass der Torus nicht geschlossen ist und/oder der Torus nicht exakt kreisförmig ist und/oder der Torus gerade Lichtleiterstücke umfasst,
bei dem die Prismen (46) im Wesentlichen in der Brennebene der asphärischen Vorderseite des Lichtleiterringes (4) angeordnet sind,
bei dem die halbe Prismenbreite (H) kleiner ist als die halbe Breite (B) des Lichtleiterringes, und
bei dem die Prismen (46) derart ausgeführt sind, und die Vorderseite des Lichtleiterringes derart asphärisch ausgeführt ist, dass von dem Lichtleiterring (4) Licht im Wesentlichen entlang einer Hauptabstrahlrichtung (33), die parallel zur Fahrzeuglängsachse liegt, austritt.

2. Fahrzeugscheinwerfer (1) nach Anspruch 1
bei dem die Vorderseite des Lichtleiterringes derart asphärisch ausgeführt ist, dass die sphärische Abberartion korrigiert wird.

3. Fahrzeugscheinwerfer (1) nach einem der vorhergehenden Ansprüche,
bei dem die Prismen (46) einen Ausschnitt eines Fresnelprismas bilden.

4. Fahrzeugscheinwerfer (1) nach einem der vorhergehenden Ansprüche, bei dem das Licht aus der Lichtquelle (7) indirekt über einen Reflektor oder direkt in den Lichtleiterring (4) eingekoppelt wird, und
bei dem die Prismen (46) derart ausgeführt sind, dass Licht durch die Prismen abgelenkt und/oder ausgekoppelt wird.

5. Fahrzeugscheinwerfer (1) nach einem der vorhergehenden Ansprüche,
bei dem der Abstand zwischen dem Brennpunkt und der Vorderseite des Lichtleiterringes die halbe Breite (B) des Lichtleiterringes nicht wesentlich überschreitet.

## Claims

1. A vehicle headlamp (1) comprising
a light source (7), and
an optical fibre ring (4) receiving light from the light source (7), wherein the optical fibre is substantially toroidal in shape,
wherein the shape of the optical fibre ring differs from an ideal torus in that the front thereof is non-spherical and the back of the ring has a number of prisms (46) so that light can escape from the ring (4),
wherein the shape of the ring differs from an ideal torus in that the torus is not closed and/or the torus is not exactly circular and/or the torus comprises straight pieces of optical fibre,
wherein the prisms (46) are disposed substantially at the focal point of the non-spherical front of the optical fibre ring (4),
wherein half the width (H) of the prisms is smaller than half the width (B) of the optical fibre ring and
wherein the prisms (46) are constructed and the front of the ring is made non-spherical such that light from the optical fibre ring (4) emerges substantially along a main direction of radiation (33) parallel to the longitudinal axis of the vehicle.

2. A headlamp (1) according to claim 1,
wherein the front of the optical fibre ring is non-spherical so as to correct the spherical properties.

3. A headlamp (1) according to any of the preceding claims, wherein the prisms (46) form a portion of a Fresnel prism.

4. A headlamp (1) according to any of the preceding claims, wherein the light from the light source (7) is coupled into the ring (4) either directly or indirectly via a reflector and
wherein the prisms (46) are constructed so that light is deflected and/or decoupled by the prisms.

5. A headlamp (1) according to any of the preceding claims, wherein the distance between the focal point and the front of the optical fibre ring does not substantially exceed half the width (B) of the ring.

## Revendications

1. Phare de véhicule (1) comportant
une source de lumière (7),
un anneau d'éclairage (4) dans lequel pénètre la lumière de la source de lumière (7), cet anneau d'éclairage ayant essentiellement la configuration d'un tore,
dans lequel la configuration de l'anneau d'éclairage s'écarte d'un tore idéal en ce que la face conductrice de lumière avant est non sphérique et la face arrière de l'anneau d'éclairage comporte plusieurs prismes (46) pour permettre à la lumière de sortir de l'anneau d'éclairage (4),
la conformation de l'anneau d'éclairage s'écarte d'un tore idéal en ce que le tore n'est pas fermé et/ou le tore n'est pas exactement circulaire et/ou le tore comporte des parties conductrices de la lumière rectilignes,
les prismes (46) sont essentiellement situés dans le plan focal de la face avant non sphérique de l'anneau d'éclairage (4),
la moitié de la largeur (H) des prismes est inférieure à la moitié de la largeur (B) de l'anneau d'éclairage, et
les prismes (46) sont réalisés et la face avant de l'anneau d'éclairage est réalisée non sphérique de sorte que la lumière sorte de l'anneau d'éclairage (4) la lumière essentiellement le long d'une direction de rayonnement principale (33) qui est située parallèlement à l'axe longitudinal du véhicule.

2. Phare de véhicule (1) conforme à la revendication 1, dans lequel la face avant de l'anneau d'éclairage est non sphérique de sorte que l'aberration sphérique soit corrigée.

3. Phare de véhicule (1) conforme à l'une des revendications précédentes, dans lequel les prismes (46) forment la section d'un prisme de Fresnel.

4. Phare de véhicule (1) conforme à l'une des revendications précédentes, dans lequel la lumière sortant de la source de lumière (7) est accouplée indirectement par un réflecteur ou directement dans l'anneau d'éclairage (4), et les prismes (46) sont réalisés de sorte que la lumière soit déviée et/ou découplée par les prismes.

5. Phare de véhicule (1) conforme à l'une des revendications précédentes, dans lequel la distance entre le foyer et la face avant de l'anneau d'éclairage ne dépasse pas essentiellement la moitié de la largeur (B) de l'anneau d'éclairage.
